(19) Europäisches Patentamt

European Patent Office

Office européen des brevets

(11) Veröffentlichungsnummer : **0 157 143**
**B1**

(12) # EUROPÄISCHE PATENTSCHRIFT

(45) Veröffentlichungstag der Patentschrift :
09.09.87

(21) Anmeldenummer : 85101793.9

(22) Anmeldetag : 19.02.85

(51) Int. Cl.⁴ : **C 09 K   3/10**, C 04 B  28/00 //
(C04B28/00, 24:12)

(54) **Feuerhemmende Verschlussmassen.**

(30) Priorität : **27.02.84 DE 3407007**

(43) Veröffentlichungstag der Anmeldung :
**09.10.85 Patentblatt 85/41**

(45) Bekanntmachung des Hinweises auf die Patenterteilung : **09.09.87 Patentblatt 87/37**

(84) Benannte Vertragsstaaten :
**AT BE CH DE FR GB LI NL SE**

(56) Entgegenhaltungen :
**FR-A- 2 108 510**
**US-A- 2 888 359**

(73) Patentinhaber : **BAYER AG**
**Konzernverwaltung RP Patentabteilung**
**D-5090 Leverkusen 1 Bayerwerk (DE)**

(72) Erfinder : **von Bonin, Wulf, Dr.**
**Mendelssohnstrasse 30**
**D-5090 Leverkusen 1 (DE)**

**Beschreibung**

Die vorliegende Erfindung bezieht sich auf feuerhemmende Verschlußmassen mit verbesserten Eigenschaften auf Basis hydraulischer Bindemittel.

Mit Zement, Gips, Mg-Oxichlorid oder anderen hydraulischen Bindemittel gebundene Mörtel und Betone, bzw. diese Bindemittel selbst werden oftmals zum feuerhemmenden Verschließen von Mauerdurchbrüchen verwendet.

Da diese Stoffe bei Feuereinwirkung ihr Hydratwasser verlieren, wird auch eine befriedigende Wirkung gegen den Durchtritt von Hitze im Brandfalle erzielt. Das Isoliervermögen dieser Verschlußmassen ist relativ gering, selbst dann, wenn man sie porös einstellt, z. B. durch Zusatz von viel Anmachwasser oder porösen Füllstoffen.

Andererseits wird eine zu geringe Wärmeleitung solcher Verschlußmassen auch nicht angestrebt, weil z. B. es von Vorteil ist, wenn die Wärme von Kabeln aus einem mit solchen Verschlußmassen abgedichteten Kabelschott in das noch kühle Mauerwerk im Brandfalle abgeleitet oder andersartig absorbiert werden kann.

Es wäre also anzustreben, zwei gegensätzliche Eigenschaften in solchen Verschlußmassen zu vereinen : Einmal brauchbares Isoliervermögen, zum anderen das Vermögen, Wärme zu « schlucken ».

Außerdem sollte die Festigkeit bzw. der Verbund im Falle der Beflammung möglichst lange erhalten bleiben, andererseits sollte die Festigkeit nur mäßig sein, z. B. um eine einfache Reinstallierbarkeit von Kabelschotts zu ermöglichen. Schließlich sollte im Brandfalle eine möglichst geringe Rißbildungstendenz der Verschlußmasse gegeben sein und die Möglichkeit bestehen, auch nicht staubende Einstellungen der Verschlußmasse zu formulieren.

Es ist weiterhin zu fordern, daß eine derartige Verschlußmasse im Brandfalle in der Lage ist, Halogenwasserstoffgase, wie sie beim Verbrennen von PVC-Kabelmänteln beispielsweise entstehen, zu neutralisieren.

Aus der FR-A 21 08 510 sind feuerfeste Formmassen bekannt, die eine Mischung anorganischer hydraulischer Bindemittel auf Silicium- und Kalziumbasis, Mineralfasern und eine Mischung aus organischen Fasern mit thermoplastischen oder thermohärtbaren Polymeren oder thermoplastische oder thermohärtbare Polymere oder Bitumen oder wasserquellbare oder wasserlösliche Alkoylcellulose-Harze oder kristallines Aluminiumoxid enthalten. Als Bindemittel auf Kalziumbasis werden dort Kalziumcarbonat und Gips beschrieben, als thermoplastische Polymere Melaminharze und als Reaktionsbeschleuniger Aluminiumhydroxide. Zusätze von Phosphorsäurespendern werden jedoch nicht beschrieben. Mit der vorliegenden Erfindung werden feuerhemmende Verschlußmassen zur Verfügung gestellt, die einen Phosphorsäurespender enthalten. Wie aus den vorliegenden Beispielen ersichtlich ist, zeichnen sich solche feuerhemmenden Verschlußmassen dadurch aus, daß sie sich bei Beflammung langsamer erwärmen als entsprechende, jedoch von Phosphorsäurespendern freie Massen.

Es wurde nun überraschenderweise gefunden, daß diese Forderungen insgesamt zu verwirklichen sind, wenn man als Verschlußmassen Mörtel oder Betone auf Basis hydraulischer Bindemittel verwendet, die neben dem Bindemittel dehydratisierbare, nicht hydraulisch abbindende Füllstoffe und Melamin sowie als weiteren Hilfsstoff Phosphorsäurespender enthalten. Insbesondere eignet sich hier Calciumsulfat (Gips) der unterschiedlichsten Dehydratisierungsstufen als Bindemittel. Besonders vorteilhaft sind solche Verschlußmassen, die bezogen auf hydraulisches Bindemittel das Melamin plus dehydratisierbarem Füllstoff in gleicher oder höherer Menge enthalten.

Als gegebenenfalls weitere Füllstoffe eignen sich neben den üblichen Füllstoffen wie Sand, Tonerde, Kieselerden, Kreiden auch poröse Füllstoffe wie Holz, Perlit, Vermikulit, Zeolithe, Glasschaum, Blähgraphit, Silikathohlperlen, Blähton usw. Polystyrolschaum, Kork, Holz, polyurethanschaum usw.

Von Interesse ist, daß die Abbindefähigkeit der hydraulischen Bindemittel, insbesondere des Gipses oder Anhydrits durch auch sehr hohe Zusätze von Melamin überraschenderweise nicht vermindert wird.

Weiterhin zeigte sich überraschenderweise, daß obzwar Gips selbst ein dehydratisierbares Material ist, die Kombination von Gips aber mit z. B. Al-Oxihydrat als dehydratisierbarem Füllstoff und Melamin zu überlegener Feuerwiderstandsfähigkeit führt.

Andererseits ist von Interesse, daß in Brandfalle der Zusammenhalt der erfindungsgemäßen Verschlußmassen durch Zusätze von Phosphorsäurebildnern, bzw. Phosphaten bewahrt, die Feuerwiderstandsfähigkeit erhöht und die Rißbildungsanfälligkeit vermindert wird.

Schließlich kann durch Zusätze von Kunststofflatices, insbesondere solchen mit ausgeprägter Filmbildungstendenz, auch bei niedrigen Temperaturen um 0 °C auch Elastifizierung und eine im Reinstallationsfalle nicht staubende Einstellung sowie überraschenderweise eine Erhöhung der Feuerwiderstandsdauer der erfindungsgemäßen Verschlußmassen erzielt werden.

Hierbei bewirkt der Melamingehalt der Verschlußmassen, daß im Brandfalle der Kunststoffanteil der Latices nicht zu einer Beeinträchtigung der Feuerwidrigkeit führt.

Gleichzeitig bewirkt das Melamin bei der thermischen Zersetzung im Brandfalle die Abspaltung basischer Gase, die Halogenwasserstoffe als Ammonsalze zu binden vermögen : ein wesentlicher Faktor im Elektroinstallationsbereich.

Weiterhin verbraucht das Melamin bei dieser Zersetzung, die endothermen Charakter hat, Energie, ebenfalls beim Aufschmelzen und Sublimieren, so daß hierdurch ein von der Dehydratisierung der Verschlußmasse und ihrer Füllstoffe unabhängiger Mechanismus der Wärmeabfuhr wirksam wird. Auch wenn mehr als 80 Volumenprozente der Verschlußmasse aus Melamin bestehen, verbleibt nach dem überraschenderweise unter Erhalt des Bindemittelgerüstes ablaufenden Schmelzen, Sublimieren und Zersetzen des Melamins, das unter erheblicher Wärmeaufnahme abläuft, noch ein hochporöses, hervorragend isolierendes Restmaterial, das durch die Anwesenheit von Phosphorsäurespendern dem Feuer, bzw. der Fortleitung von Wärme auch einen erheblichen Widerstand entgegen zu setzen imstande ist.

Die überraschend synergistische Kombination verschiedenster Vorteile eröffnet den erfindungsgemäßen Verschlußmassen überall dort besondere Einsatzgebiete, wo es erforderlich ist, einen möglichst sicheren, aber reinstallierbaren Schutz auch bei relativ geringen Wandstärken gegen den Durchtritt von Feuer und Hitze zu erzielen. Hierbei kann es sich um Ausfüllungen von Durchbrüchen durch Mauern, um Verfugungen oder auch um die flächige Auftragung auf gefährdeten Untergründen oder um aus den erfindungsgemäßen Verschlußmassen hergestellte Plattenware oder Formkörper mit oder ohne Deckschichten handeln.

Die erfindungsgemäßen feuerhemmenden Verschlußmassen auf Basis hydraulischer Bindemittel sind gekennzeichnet dadurch, daß sie neben Phosphorsäurespendern dehydratisierbare Füllstoffe und Melamin enthalten.

Die vorliegende Erfindung bezieht sich auf feuerhemmende Verschlußmassen auf Basis hydraulischer Bindemittel gegebenenfalls in Abmischung mit sonstigen Füllstoffen und sonstigen Hilfsstoffen, dadurch gekennzeichnet, daß sie Melamin und dehydratisierbare Füllstoffe beigefügt enthalten, sowie einen Phosphorsäurespender.

Bevorzugt sind solche Verschlußmassen, die dadurch gekennzeichnet sind, daß sie mindestens die der Bindemittelmenge gleiche Gewichtsmenge an Melamin plus dehydratisierbarem Füllstoff enthalten.

Bevorzugt sind ferner solche Verschlußmassen, die als Hilfsstoff Kunststoffdispersionen enthalten.

Bevorzugt sind ferner solche Verschlußmassen, die als weiteren Füllstoff Poren, bzw. Hohlräume aufweisende Füllstoffe enthalten.

Die Erfindung bezieht sich aber auch auf Förmkorper, wie Platten, Sandwiches, Fertigteile, Halbzeuge und Fugen- bzw. Hohlraumausfüllungen, das soll bedeuten Vorrichtungen, die dem vorbeugenden Brandschutz dienen und unter Verwendung oder Mitverwendung der vorbeschriebenen feuerhemmenden Verschlußmassen hergestellt worden sind.

Als hydraulische Bindemittel werden solche bezeichnet, die zunächst in beliebig verformbarer Form vorliegen und nach Zusatz von Wasser oder wasserhaltigen Zusätzen unter Verfestigung erstarren.

Vorzugsweise handelt es sich um anorganische Bindemittel wie Magnesiumchlorid-Zemente, Portlandzemente, Puzzolanzemente, Hochofenzemente, sogenannte Schnellzemente, Metalloxidzemente usw. Besonders gut geeignet wegen des hohen Hydratwassergehaltes in gebundener Form und wegen des guten Verarbeitungsverhaltens sind Calciumsulfat-Bindemittel wie α-Gips, β-Gips, Stuck-Gips, Putz-Gips oder Anhydrit. Besonders gut geeignet ist der übliche Stuckgips, gegebenenfalls in verzögerter Form.

In den trockenen Verschlußmassen soll das hydraulische Bindemittel in Mengen von 3 bis 90, bevorzugt 10-bis 50 Gew.-% enthalten sein.

Als sonstige Füllstoffe kommen neben Mineralfasern, Glasfasern, Kohlenstoffasern oder organischen Fasern solche in Betracht, die vorliegen als Granulat, Pulver, Stäbchen, Bändchen, Blättchen, in verschiedensten Kristallitformen oder solche, die als Schaumstoff, Kugel oder Hohlkugel vorliegen können.

Von besonderem Interesse sind erfindungsgemäß dehydratisierbare oder Ammoniak abspaltende Füllstoffe, die ihrerseits durch Zersetzungsreaktion bzw. Wasserabspaltung oder Verdampfung bei Temperaturen zwischen 100 °C und 700 °C vorzugsweise 120 °C und 400 °C Wärme « verbrauchen ».

Solche Füllstoffe sind z. B. Alkalisilikate, Zeolithe, bzw. sonstige hydratisierte Phosphate, Silikate, Borsilikate oder Borate, Aluminiumoxidhydrate, Cyanursäureabkömmlinge und analoge, wie sie z. B. in der nicht vorveröffentlichten deutschen Patentanmeldung 3 302 416 genannt werden, Phenol-, Melamin- bzw. Harnstoff-Formaldehydharze, blähfähige Graphite und Glimmer, Vermikulite und Perlite, kristallwasserhaltige Mineralien wie Alumohydrocalcit, Artinit, Dawsonit, Ettringit, Hydrocalumit, Hydroganat, Hydromagnesit, Hydrotalkit, Nesquehonit, Scarbroit, Thaumasit ·und Wermlandit. Von besonderem Interesse sind Aluminiumhydroxide bzw. Aluminiumoxidhydrate oder hydratisierte Tonerden.

Die dehydratisierbaren Füllstoffe haben üblicherweise nicht die Fähigkeit, ihrerseits hydraulisch abzubinden.

Sie sind in den erfindungsgemäßen Brandschutz-Verschlußmassen in Mengen von 0,5 bis 80, vorzugsweise 20-60 Gew.-% enthalten.

Weiterhin sind als sonstige Füllstoffe solche von Interesse, die in poröser, geschäumter oder hohlkugeliger Gestalt vorliegen und organischen oder insbesondere anorganischen Charakter haben und bereits eingangs beispielhaft genannt wurden.

Die sonstigen Füllstoffe können in den Brandschutzmassen in Mengen von 80 bis 0 Gew.-%, vorzugsweise 60 bis 0 Gew.-% enthalten sein. Hohe derartige Füllstoffanteile sind dann angebracht, wenn eine relativ leicht zu durchbohrende, d. h. relativ weich eingestellte Brandschutzverschlußmasse gewünscht wird.

Als sonstige Hilfsstoffe werden z. B. Beschleuniger oder Verzögerer, wie sie in der Technik der hydraulischen Bindemittel bekannt sind bezeichnet, ebenso wie Fließhilfsmittel, Schaum- und Porenbildner, Hydrophobiermittel, Verdicker und Verflüssiger, Abschirmhilfen wie Borverbindungen, Polyethylen, Schwermetalle, Korrosionsschutzmittel, Biozide, Geruchsstoffe, Farbstoffe und Pigmente.

Als Phosphorsäurespender kommen neben z. B. rotem Phosphor selbst organische oder anorganische Phosphor enthaltende Verbindungen in Betracht, z. B. Alkaliphosphate und insbesondere Aminsalze bzw. Ammoniumsalze von Phosphorsäuren. Solche Phosphorsäurespender sind z. B. Phosphorsäureester, Phosphonsäuren, Phosphinsäure, Phosphazene, aber auch zur Phosphorsäureabpsaltung geeignete Alkaliphosphate oder Polyphosphate wie z. B. $Na_2HPO_4$ oder Kaliummetaphosphate, bzw. Pyrophosphate.

Sehr gut geeignet sind vor allem jedoch saure, basische oder vor allem neutral reagierende Salze von Aminen mit Phosphorsäuren. Hier werden als Phosphorsäuren auch organische oder anorganische Säuren mit verschiedenen Wertigkeitsstufen des Phosphors, vor allem aber Ortho-phosphorsäure neben Poly-, Pyro- und Metaphosphorsäure verstanden.

Als Amine werden hier insbesondere Ammoniak, Ethylendiamin und Melamin wegen ihrer guten Zugänglichkeit und der guten Eignung für den erfindungsgemäßen Zweck verwendet, es kommen aber auch alle sonstigen mit Phosphorsäuren zur Adduktbildung befähigten, zumeist Stickstoff enthaltenden Verbindungen in Betracht, also auch polymere Verbindungen wie z. B. basische Harnstoff-, Melamin-, Phenol-, Styrol-, Eiweißharze.

Zumeist verwendet man Mono- oder Diammonium-orthophosphat, das Neutralisationsprodukt aus Ethylendiamin und Orthophosphorsäure oder das Addukt aus 0,1 bis 3, vorzugsweise 0,5 bis 1 Mol Orthophosphorsäure und Melamin.

Die Phosphorsäurespender sind in den erfindungsgemäßen feuerhemmenden Verschlußmassen in Mengen von 0,3 bis 70 Gew.-%, vorzugsweise 5 bis 35 Gew.-%, enthalten.

Fernerhin sind als Hilfsstoffe auch Zusätze von Kunststoffen, Kunstharzen, Ölen jeglichen Viskositätsgrades, insbesondere in Form von Kunststoffdispersionen zu verstehen. Diese haben neben der Eigenschaft, überraschenderweise die Feuerwiderstandsfähigkeit zu verbessern, die Eigenschaft, den Verschlußmassen eine gewisse Elastizität zu verleihen, insbesondere den Zweck, dafür zu sorgen, daß im Falle der Reinstallation, bei der die Verschlußmassen gegebenenfalls wieder aufgebohrt werden müssen, keine Staubentwicklung auftritt. Das bedeutet, daß neben Dispersionen von mehr oder weniger hochviskosen öligen, klebenden Verbindungen, seien es Bitumen, Polyisobutylen, Polyether, Polyester, Kohlenwasserstoffpolymerisate, Teere, Harze, Erdölfraktionen, insbesondere Kunststoffdispersionen mit guter Elektrolytbeständigkeit und einer bei — 15 °C bis + 40 °C insbesondere 0 bis 20 °C liegenden Filmbildungstemperatur, das ist die Temperatur, bei der solch eine Dispersion noch unter Ausbildung eines geschlossenen Filmes auftrocknet, in Betracht kommen. Solche Kunststoffdispersionen können z. B. auf Polyurethanbasis, auf Basis von Olefin-, (Meth)-Acrylat-, Vinylester- oder Polyvinylhalogenid- bzw. Chloropren-Copolymerisaten aufgebaut sein.

Besonders gut geeignet sind elektrolytstabile Dispersionen von Polyurethanen, Butadiencopolymerisaten, Vinylantatcopolymerisaten und Polyacrylsäureestern.

Solche Dispersionen können vorzugsweise dem Anmachwasser zugesetzt werden.

In den erfindungsgemäßen Verschlußmengen sind in getrocknetem Zustand die solcherart eingebrachten Kunststoffe in Mengen von 0,0 bis ca. 60, vorzugsweise 3 bis 30 Gew.-% enthalten.

Hierbei ist von Vorteil, daß die in den erfindungsgemäßen Verschlußmassen enthaltenen Anteile von Melamin die Tendenz der Kunststoffe, im Brandfall zur Entflammung der Verschlußmasse beizutragen hervorragend unterdrücken können.

Als Melamin wird vorzugsweise der Grundkörper 2,4,6-Triamino-s-Triazin verstanden, es sind jedoch auch z. B. dessen durch thermische Behandlung oder Umsetzung mit Formaldehyd erhältlichen Kondensationsprodukte in Betracht zu ziehen oder auch seine Salze, z. B. Phosphate.

Im Rahmen der Erfindung werden unter der Bezeichnung Melamin auch andere Cyanursäureabkömmlinge mit in Betracht gezogen, d. h. als Cyanursäureabkömmlinge werden erfindungsgemäß in Betracht gezogen :

Cyanursäure und/oder ihre Derivate, d. h. Cyanursäure bzw. Verbindungen, die sich als Cyanursäure- bzw. Isocyansäureabkömmlinge verstehen lassen. Solche sind z. B. Cyanamid, Dicyanamid, Dicyandiamid, Guanidin und dessen Salze, Biguanid, Urazol, Urazolcyanurat, Melamincyanurat, Cyanursäuresalze und Cyanursäureester und -amide.

Im erfindungsgemäßen Sinne werden hier auch Harnstoff, Hydrazodicarbonamid, Guanidin, Allophanat, Biuret, Dicyandiamid, deren Polykondensationsprodukte und vorwiegend deren wasserunlösliche Formaldehydkondensationsprodukte miterfaßt.

Aus Gründen der guten Zugänglichkeit bei guter Unempfindlichkeit gegen Wasser wird vorzugsweise Melamin verwendet.

Das Melamin ist in den erfindungsgemäßen Verschlußmassen in Mengen von 0,25-80, vorzugsweise 10-60 Gew.-% enthalten.

Die in den erfindungsgemäßen Brandschutzverschlußmassen enthaltenen Mengen von dehydratisierbarem Füllstoff plus Melamin betragen 0,5 bis 99, vorzugsweise 10 bis 90 Gew.-%, insbesondere sind sie mindestens dem Bindemittelanteil gleich.

Alle in dieser Beschreibung genannten Prozentangaben addieren sich mit dem Bindemittelanteil von 0,5 bis 90, vorzugsweise 3 bis 50 Gew.-% in der Verschlußmasse insgesamt (ohne Wasseranteil) zu 100 Gew.-%.

Die erfindungsgemäßen Brandschutz-Verschlußmassen liegen vorzugsweise zunächst als pulveriges Komponentengemisch vor, werden dann mit Wasser und/oder Dispersionen bzw. Lösungen von Hilfsstoffen angemacht und in gewünschter hydraulisch abbindender oder auch nur physikalisch durch Trocknung verfestigter Form und Konsistenz als gießfähige Einstellung oder Paste zum Verschluß von Fugen oder Öffnungen gegebenenfalls auch zur Beschichtung von Oberflächen von Bauteilen oder sonstigen Vorrichtungen wie etwa Kabeln oder Kabeltrassen gegebenenfalls auch zur Herstellung von gegebenenfalls mit Metallgittern, Mineral- oder Glasfasern, Holz- oder Cellulosefasern, C-Fasern, Aramidfasern oder sonstigen Fasern, Garnen, Geweben, Gewirken, Gelegen, verstärkten Platten, Profilen oder sonstigen Formkörpern, die vornehmlich dem Brandschutz dienen, verwendet.

Da die Mitverwendung von Kunststoffdispersionen oftmals neben guter Elastifizierung auch zu einer guten Haftung der Verschlußmassen auf organischen und anorganischen Untergründen führt, können sie auch für Zwecke der Auskleidung oder Beschichtung von z. B. Gehäusen oder Gehäuseteilen, von Kabeln oder Kabeltrassen, Wänden und Böden dienen.

Im folgenden soll die Erfindung beispielhaft erläutert werden, die angegebenen Teile und Prozente sind Gewichtsteile, sofern nicht anderes vermerkt ist.

Beispiele :

Gemäß folgender Tabelle wurden die Rezepturkomponenten zunächst als Pulver vorgemischt und dann mit einem Rührer unter Zusatz des Anmachwassers bzw. Kunststofflatex 5 Minuten gut verrührt, so daß eine homogene schüttfähige Anmischung entstand.

Diese wurde in Formen gefüllt und zu Platten 20 × 20 × 2 cm ausgehärtet. In inem Trockenschrank wurden die Platten bis zur Gewichtskonstanz bei 75 °C getrocknet.

Die Platten wurden dann in ihrem geometrischen Zentrum von der Unterseite her beflammt mit einem fest eingestellten Erdgasbrenner nach Meker, 25 mm Flammen Ø, Abstand der Brenneroberfläche von der Prüfplatte 2,5 cm, Hersteller K. K. Juchheim OHG, Bernkastel-Kues am Rhein. Auf der Plattenoberseite genau über dem Flammenzentrum wurde ein beidseitig offener Glaszylinder, Ø 2,5 cm, Höhe 3 cm, aufgesetzt und mit $Al_2O_3$-Pulver, Firma Merk, Darmstadt, standardisiert nach Brockmann gefüllt. Dann wurde ein Quecksilberthermometer in der Zylinderachse bis auf die Plattenoberfläche gesenkt, so daß die Thermometerspitze völlig vom $Al_2O_3$-Pulver umgeben war.

Mit dieser relativ arbeitenden Versuchsanordnung lassen sich die verschiedenen Prüfplatten in Bezug auf ihr Vermögen, durchtretende Wärme an die Umgebung abzugeben, hervorragend vergleichend testen, wenn man die Zeiten feststellt, die vom Beginn der Beflammung an vergehen, bis das Thermometer 100, bzw. 150, bzw. 180 °C anzeigt.

Diese Meßwerte sind ebenfalls in der Tabelle aufgeführt.

Als Gips wurde handelsüblicher Stuckgips verwendet, in den mit Stern bezeichneten Fällen als Gips « Wülframix®-Glättputz » der Fa. Wülfrather Kalkwerke.

Als phosphat wurde Diammonium-orthophosphat verwendet, als Al-Oxidhydrat Martifin® der Firma Martinswerke AG.

Als Si-Hohlperlen wurden Alumosilikathohlperlen, Ø unter 0,5 mm, Schüttgewicht 300 g/l verwendet.

Als Kunststofflatex wurde ein auf 20 % verdünnter Polyurethanlatex der Bayer AG, PU-Dispersion DLS, 50 %ig, verwendet.

(Siehe Tabelle Seite 6 f.)

| Beispiel Nr. | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Gew.-Tle. Gips | 64,3 | 7,1 | 6,1 | 5,5 | 6,5 | 7,5 | 7,5 | 30 | 30 | 460* | 460* | 460** | -- | 300 | 300 |
| Gew.-Tle. Portlandzement | ---- | --- | --- | --- | --- | -- | --- | -- | -- | --- | --- | --- | 300 | | |
| Gew.-Tle. Melamin | ---- | 28,2 | 10,1 | 5,0 | 48,3 | 28,5 | 28,1 | 20 | 20 | 250 | 250 | 250 | 250 | 300 | 300 |
| Gew.-Tle. Phosphat | ---- | --- | 7,0 | 5,5 | 6,6 | --- | 7,5 | -- | 5 | --- | 20 | 10 | --- | 100 | 100 |
| Gew.-Tle. Al-Oxidhydrat | ---- | 28,2 | 35,5 | 38,6 | 5,0 | 28,5 | 28,1 | 20 | 20 | 210 | 210 | 250 | 250 | 300 | 300 |
| Gew.-Tle. Si-Hohlperlen | ---- | --- | --- | --- | --- | --- | --- | -- | -- | 920 | 920 | --- | --- | --- | --- |
| Gew.-Tle. $H_2O$ | 35,7 | 36 | 38 | --- | 30 | --- | --- | 30 | -- | 1110 | 210 | 400 | 350 | 460 | |
| Gew.-Tle. 20 % Latex | ---- | --- | --- | 45,5 | --- | 40 | 40 | -- | 41 | --- | 920 | --- | --- | --- | 375 |
| ca.-Raumgewicht g/cm³ | 1 | 1 | 1 | 1 | 1 | 1 | 1 | 1 | 1 | 0,75 | 0,75 | 1,1 | 1,1 | 1,1 | 1,1 |
| Minuten bis 100°C | 25 | 18 | 15 | 18 | 20 | 18 | 18 | 17 | 23 | 28 | 27 | 16 | 15 | 20 | 23 |
| 150°C | 36 | 41 | 45 | 48 | 45 | 42 | 45 | 40 | 60 | 90 | 100 | 45 | 40 | 57 | 61 |
| 180°C | 45 | 71 | 85 | 120 | 75 | 90 | 101 | 69 | 120 | 120 | 120 | 78 | 70 | 135 | 140 |

* Glättputz
** Anhydrit

0 157 143

Die Platten wurden alle auf ein bei 1 liegendes spezifisches Gewicht eingestellt, um eine gute Vergleichbarkeit sicherzustellen.

Die Beispiele 1, 2, 6, 8, 10 und 13 dienen als Vergleichsbeispiele und zeigen die Wärmedurchgangseigenschaften von normalen Gipsplatten (Beispiel 1) oder von ohne Phosphorsäurespender hergestellten Platten (Beispiele 2, 6, 8, 10 und 13).

Beispiel 3 zeigt die erfindungsgemäße Verbesserung des Wärmedurchgangsverhaltens durch Phosphatzusatz und Beispiel 4 die weitere Verbesserung durch Zusatz von Kunststofflatex. Die positive Rolle wird auch im Beispiel 7 nochmals belegt sowie in den Beispielem 9 und 11, wobei letztere mit handelsüblichem verzögerten Gipsputz ausgeführt worden sind.

Aus den Beispielen folgt die gute Eignung der erfindungsgemäßen Brandschutz-Verschlußmassen zum Verschließen von Durchbrüchen in Brandmauern oder bei Kabeldurchführungen durch Mauern, wobei hier in besonderem Maße die Kombination mit intumeszierenden Brandschutzmaterialien angezeigt sein dürfte. Da die mit Kunststofflatices hergestellten Platten, bzw. Verfüllungen z. B. gemäß Beispiel 4 einerseits recht wenig hart sind und gut durchbohrt werden können, dabei andererseits nicht zum Stauben neigen, wie die Bearbeitung mit einer Bohrmaschine zeigt, sind sie auch für den Verschluß von Kabeldurchbrüchen mit Reinstallationsmöglichkeiten in Räumen mit staubempfindlichen Relais u. ä. geeignet. Sie sind mit allen Farben nach dem Abtrocknen gut überstreichbar.

Eine Kombination gemäß Beispiel 11 oder 9 eignet sich gut als besonders gut wirksamer Flächenverputz für Brandschutzzwecke oder auch zur Herstellung von feuerhemmenden Halbzeugen, Formteilen und Mörteln.

Die Kombination gemäß Beispiel 3 oder 4 kann durch längeres Rühren bei RT über 5 h am Abbinden gehindert werden und ergibt dann eine kittartige Paste, die z. B. aus der Kittpistole appliziert werden kann und dann zu einem harten Material mit gewissem elastifiziertem Verhalten und guter Feuerwiderstandsfähigkeit auftrocknet.

**Patentansprüche**

1. Feuerhemmende Verschlußmassen auf Basis hydraulischer Bindemittel, gekennzeichnet durch einen Gehalt an hydraulischen Bindemitteln von 3 bis 90 Gew.-%, an dehydratisierbaren Füllstoffen von 0,5 bis 80 Gew.-% und an Melaminen von 0,25 bis 80 Gew.-% und enthaltend als Hilfsstoff 0,3 bis 70 Gew.-% eines Phosphorsäurespenders, jeweils bezogen auf trockene Verschlußmasse.

2. Verschlußmassen nach Anspruch 1, enthaltend als weiteren Hilfsstoff Kunststoffdispersionen.

3. Verschlußmassen nach einem der Ansprüche 1 oder 2, enthaltend als weiteren Füllstoff Poren oder Hohlräume aufweisende Füllstoffe.

4. Formkörper, erhältlich unter Verwendung oder Mitverwendung der Verschlußmassen gemäß einem der Ansprüche 1 bis 3.

5. Verfahren zur Herstellung von feuerhemmenden Verschlußmassen auf der Basis hydraulischer Bindemittel, dadurch gekennzeichnet, daß man 3 bis 90 Gew.-% hydraulische Bindemittel, 0,5 bis 80 Gew.-% dehydratisierbare Füllstoffe, 0,25 bis 80 Gew.-% Melamine und 0,3 bis 70 Gew.-% Phosphorsäurespender, jeweils bezogen auf trockene Verschlußmasse, mischt und mit Wasser und/oder Dispersionen oder Lösungen von Hilfsstoffen anmacht.

**Claims**

1. Fire-retardant sealing compounds based on hydraulic binders, characterised in that they contain 3 to 90 % by weight of hydraulic binders, 0.5 to 80 % by weight of dehydratable fillers and 0.25 to 80 % by weight of melamines and contain 0.3 to 70 % by weight of a phosphoric acid donor as an auxiliary, based in each case on the dry sealing compound.

2. Sealing compounds according to Claim 1, containing plastic dispersions as a further auxiliary.

3. Sealing compounds according to one of Claims 1 or 2, containing fillers having pores or cavities as a further filler.

4. Mouldings, obtainable using, alone or in a combination, the sealing compounds according to one of Claims 1 to 3.

5. Process for the production of fire-retardant sealing compounds based on hydraulic binders, characterised in that 3 to 90 % by weight of hydraulic binders, 0.5 to 80 % by weight of dehydratable fillers, 0.25 to 80 % by weight of melamines and 0.3 to 70 % by weight of phosphoric acid donor, based in each case on the dry sealing compound, are mixed and stirred with water and/or dispersions or solutions of auxiliaries.

**Revendications**

1. Compositions de scellement retardatrices de combustion, à base de liants hydrauliques, caractérisées par une teneur en liants hydrauliques de 3 à 90 % en poids, une teneur en charges déshydratables de 0,5 à 80 % en poids et une teneur en mélamines de 0,25 à 80 % en poids et contenant comme substance auxiliaire 0,3 à 70 % en poids d'un donneur d'acide phosphorique, dans chaque cas par rapport à la composition de scellement sur base sèche.

2. Compositions de scellement suivant la revendication 1, contenant comme autre substance auxiliaire des dispersions de matière plastique.

3. Compositions de scellement suivant l'une des revendications 1 et 2, contenant comme autre charge des charges présentant des pores ou des cavités.

4. Pièce moulée, pouvant être obtenue par utilisation ou utilisation simultanée des compositions de scellement suivant l'une des revendications 1 à 3.

5. Procédé de production de compositions de scellement retardatrices de combustion à base de liants hydrauliques, caractérisé en ce qu'on mélange 3 à 90 % en poids de liants hydrauliques, 0,5 à 80 % en poids de charges déshydratables, 0,25 à 80 % en poids de mélamines et 0,3 à 70 % en poids de donneurs d'acide phosphorique, dans chaque cas par rapport à la composition de scellement sur base sèche, et on délaye avec de l'eau et/ou des dispersions ou des solutions de substances auxiliaires.